# EUROPÄISCHE PATENTANMELDUNG

(11) **EP 1 031 954 A2**
(43) Veröffentlichungstag der Anmeldung: **30.08.2000**
(21) Anmeldenummer: 00100693.1
(22) Anmeldetag: 14.01.2000
(51) Int. Cl.: G08C 25/00

(54) **Messanordnung und Messverfahren**

(30) Priorität: 22.01.1999 DE 19902490
(71) Anmelder: Securiton AG, CH-3052 Zollikofen (CH)
(72) Erfinder: Vockenhuber, Peter, 1427 Villars-Burquin (CH); Wagnieres, Philipp, 1400 Yverdon les Bains (CH)
(74) Vertreter: Révy von Belvárd, Peter

(57) **Zusammenfassung**

Eine Meßanordnung weist mindestens zwei gesondert anwählbare Gruppen von Meßeinheiten (3) entlang mindestens einer Kabelstrecke (21, 22) auf. Die Meßeinheiten (3) sind über eine an der Kabelstrecke (21, 22) angebrachte Abfragestation (18, 18') abfragbar. Jeweils am Ende einer von einer weiteren Gruppe (21, 22b) gefolgten Gruppe (22a) von Meßeinheiten (3) ist ein mit wenigstens einem Schalter (23, 23') versehener Gruppenseparatormodul (2, 2') vorgesehen, durch welchen die Gruppe (22a) von der mindestens einen weiteren Gruppe (21, 22b) separierbar bzw. abschaltbar ist. Bei einem Meßverfahren, insbesondere mit der oben angegebenen Anordnung, wird die Funktion der Kabelstrecke (21, 22) gruppenweise überwacht und bei Feststellung eines Defektes ein Alarmsignal ausgelöst.

## Beschreibung

Die vorliegende Erfindung betrifft eine Meßanordnung nach dem Oberbegriff des Anspruches 1 sowie ein Meßverfahren nach dem Oberbegriff des Anspruches 10. Eine derartige Meßanordnung ist in der WO 90/01245 geoffenbart.

In der Literatur sind die verschiedensten Adressierverfahren bekannt geworden. Dabei lassen sich zwei Gruppen unterscheiden, die gewisse Vor- und Nachteile aufweisen. Bei der ersten Gruppe handelt es sich um Verfahren gemäß dem 'daisy chain' Prinzip, in denen das verbindende Kabel zwischen zwei zu adressierenden Knoten aufgetrennt wird, wobei der adressierte Knoten nach erfolgter Transaktion aktiv über den aufgetrennten Kabelleiter den folgenden Knoten aktiviert bzw. adressiert. In der WO 98/23124 ist dieses Prinzip sehr anschaulich dargestellt, auf dessen Nachteile unten eingegangen werden soll.

Die zweite Gruppe umfaßt eine Reihe von Anordnungen und Verfahren, in denen die die Knoten verbindenden Leiter nicht aufgetrennt werden, und die Information, welcher Knoten aktiviert bzw. adressiert werden soll, über eine oder mehrere Leitungen des verbindenden Kabels übertragen, und am Ort des Knotens decodiert wird. Diese Anordnungen werden im allgemeinen als 'Bussysteme' bezeichnet. Ein spezielles Bussystem wird in den US. Patenten 5,226,123 und 5,450,072 beschrieben, wo die Information, welcher Knoten aktiviert bzw. adressiert werden soll, direkt aus der Impedanz des verbindenden Kabels gewonnen wird. Der Inhalt dieser beiden Patente soll im Rahmen dieser Beschreibung durch Bezugnahme als geoffenbart gelten.

Die beiden Gruppen weisen unterschiedliche Vor- und Nachteile auf, die sich aus der Basisanordnung ergeben. Nachteile der 'daisy chain' Verfahren sind insbesondere:
- Das verbindende Kabel muß an der Stelle jedes Knotens aufgetrennt werden. Dies führt zu höheren Kosten, Mehraufwand bei der Verkabelung und zu verringerter Zuverlässigkeit des Gesamtsystems. Weiter wird die automatisierte Herstellbarkeit von integrierten Systemen (z.B. von Sensorkabeln) durch das Durchtrennen eines Leiters wesentlich erschwert und die mechanische Stabilität verringert. Ein Sensorkabel mit durchtrennten Leitern ist gegenüber wechselnder Zugbeanspruchung empfindlich;
- Systeme nach dem Daisy Chain Verfahren sind nur von einer Seite adressierbar. Wenn dieser Nachteil überwunden werden soll, müssen entweder aufwendige schaltungstechnische Maßnahmen in der Decodierstufe getroffen werden, (Siemens/Allmendinger) oder es müssen die Schalter, die den Knoten an den Kabelkopfrechner anschalten, zweifach ausgelegt werden;
- wenn das Kabel impedanzmäßig abgeschlossen werden soll, was bei Systemen mit hoher Leistungsfähigkeit erforderlich ist, muß ein Abschlußelement in jedem Knoten vorhanden sein, wenn das System mit einer variablen Anzahl Knoten betreibbar sein soll. Dieses Abschlußelement muß jeweils dann an den Adressenleiter angelegt werden, wenn der betreffende Knoten der letzte im System ist. Daher kompliziert sich die Knotenelektronik, wobei neben dem Abschlußelement auch ein Schalter vorgesehen werden muß, mit dem dieses aktiviert werden kann;
- das Ausfallverhalten eines Knotens führt aber zu einem fatalen Fehlerbild, indem die gesamte Menge Knoten hinter dem defekten Knoten nicht mehr adressierbar ist. Dieser Nachteil kann zwar teilweise dadurch überwunden werden, daß daisy-chain Systeme in Ringtopologie betrieben werden, doch müssen dann noch die beiden oben beschriebenen Nachteile in Kauf genommen werden;
- dabei erweist es sich als weiterer Nachteil der daisy-chain Systeme, daß diese nur in festen Topologien, nämlich als Ring oder Stich betrieben werden können. Diese Nachteile wirken sich dann besonders stark aus, wenn mit dem Adressierverfahren ein Sensorkabel realisiert werden soll;
- gerade die WO 98/23124 zeigt die Problematik, dass nämlich der Nominalstrom nur auf Kurzschlüsse überwacht werden kann, nicht auf geringere Abweichungen vom Normalwert nach unten oder oben, wie es zur Erkennung 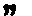 schleichender" Kurzschlüsse erforderlich wäre und wie es auch für verschiedene Anwendungen solcher Meßkabeln behördlich gefordert wird;
- ferner ist es nach dieser WO erforderlich, daß alle Einheiten (in der WO 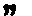 Slavestationen" genannt) im wesentlichen identisch und vor allem auch selbst 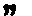 intelligent", d.h. relativ aufwendig, aufgebaut sind, wogegen eine Anordnung nach der WO 90/01245 mit relativ einfach aufgebauten, nur von der Abfragestation abfragbaren Einheiten auskommt. So werden nach WO 98/23124 für die Defekterkennung zwei Schalter (und zusätzlich ein Kondensator) benötigt, wogegen dies bei der WO 90/01245im Kabelkopfrechner (mit der Abfragestation) stattfindet;
- schliesslich kann das Daisy-Chain-System nach der WO 98/23124 (d.i. im wesentlichen ein System mit verteiltem Schieberegister) nur mit zwei Leitern sinnvoll angewendet werden und ist somit in seiner Anwendbarkeit beschränkt.

Nachteile von Bussystemen sind dagegen insbesondere:
- Bussysteme sind zwar im allgemeinen von beiden Seiten adressierbar, doch tritt die Problematik des Abschlußelements dann zutage, wenn sie in einer anderen Topologie betrieben werden sollen, als in Form einer bidirektionalen Stichleitung;
- wenn ein System gemäß den U.S. Patenten 5,226,123 und 5,450,072 aufgebaut wird, ergeben sich zwar wesentliche Vereinfachungen im Vergleich zu Systemen, in denen die Adressen der Knoten über die Leitungen übertragen werden, doch ist dann die Topologie des Systems auf Stichleitungen beschränkt;
- bei ausgedehnten Systemen mit großen Kabellängen wirken sich von außen induzierte Störungen (EMV) ungehindert auf das gesamte Busleitungssystem aus, die an allen Knoten gemeinsam anliegen.
- bestimmte Ausfallsmuster (z.B. Kurzschluß der Busleitungen) bewirken ein fatales Ausfallverhalten des Systems.

Der vorliegenden Erfindung liegt daher die Aufgabe zugrunde, die oben beschriebenen Nachteile zu überwinden. Dies gelingt mittels der kennzeichnenden Merkmale des Anspruches 1.

Die erfindungsgemäße Anordnung gestattet das Betreiben von Bussystemen mit variablen Topologien (Ring oder Stich) wobei sich die oben genannten Nachteile auf überraschend einfache Weise vermeiden bzw. minimieren lassen. Insbesondere kann:
- das Ausfallverhalten optimiert werden;
- die Herstellung automatisiert werden;
- die mechanische Stabilität optimal ausgelegt werden (kein Durchtrennen eines Leiters);
- das System von beiden Seiten adressiert werden;
- das System an vorgesehenen Stellen abgeschlossen werden;
- die Topologie des Gesamtsystems variabel gestaltet werden;
- die Signale können galvanisch getrennt und regeneriert werden;
- und die Versorgungsspannung kann regeneriert werden.

Wenn hier davon die Rede ist, daß das System an vorgesehenen Stellen abgeschlossen werden kann, so wird dies in der Regel durch einen der genannten Gruppenseparatormodul erfolgen, was aber mit sich bringt, daß das Kabelsystem dann hinter diesem eine Gruppe abschließenden Gruppenseparatormodul mit einer weiteren Gruppe fortgeführt wird. Ist dies nicht der Fall, so ist gemäß einer Weiterbildung der Erfindung vorgesehen, daß mindestens eine Gruppe von Meßstationen durch ein Abschlußelement abgeschlossen ist. Das Abschließen der Gruppen durch eines dieser Elemente ist gerade dann von Bedeutung, wenn die Datenübertragung mit hohen Leistungsdaten erfolgen soll (Anpassung der Leistungsimpedanz zur Verhinderung von Reflexionen, wie bei herkömmlichen Datenübertragungen; Anwendung als Referenzstromquelle).

Wenn hier davon die Rede ist, daß das System von beiden Seiten adressiert werden kann, so wird dies besonders ermöglicht, wenn die Kabelstrecke von wenigstens zwei Seiten her ansteuerbar ist, wobei die Kabelstrecke hierzu jeweils einen ansteuerbar ausgebildeten Eingang aufweist und/oder mindestens zwei Abfragestationen (18, 18') entlang der Kabelstrecke (21, 22), vorzugsweise jeweils im Bereiche der Enden der Kabelstrecke (21, 22), vorgesehen sind, wobei für den Fall eines Defektes an einem Teil der Kabelstrecke (21, 22) die von der einen Abfragestation nicht erreichbaren Adressen hinter dem Defekt von der jeweils anderen Abfragestation abfragbar sind.

Das erfindungsgemäße Meßverfahren kennzeichnet sich entsprechend dem Anspruch 10 und wird unten im einzelnen erläutert.

Weitere Einzelheiten und bevorzugte Ausführungsformen der Erfindung werden anhand der Figuren beschrieben. Es zeigen:
- Fig. 1: eine bevorzugte Ausführungsform der Erfindung, die das vorteilhafte Ausfallverhalten, die Adressierbarkeit von beiden Seiten, die variable Topologie und die Regenerierung der Versorgungsspannung illustriert, die
- Fig. 2a bis 2c: den mechanischen Aufbau der wichtigsten Komponenten eines bevorzugten Ausführungsbeispiels, wobei Fig. 2a eine Schaltstelle (mit zugehörigem Sensor) in Seitenansicht und Fig. 2b im Querschnitt nach der Linie A-A der Fig. 2a zeigt, wogegen aus Fig. 2c Einzelheiten eines Gruppenseparators in einer Seitenansicht ersichtlich sind;
- Fig. 3: den elektrischen Aufbau der wichtigsten Systemkomponenten gemäß der vorliegenden Erfindung.

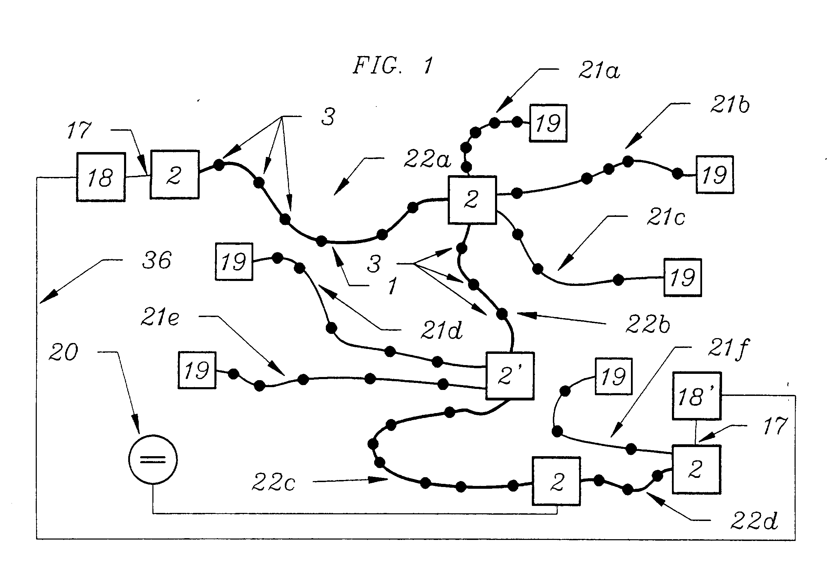

Fig. 1 zeigt eine erfindungsgemäße Anordnung zur Adressierung einer Reihe von Schaltstellen 3, die im bevorzugten Beispiel in ein Sensorkabel 1 integriert sind, und die jeweils durch Gruppenseparatormodule 2 in Hauptsegmente 22a bis 22d und in Stichleitungen 21a bis 21f unterteilt sind. Diese Unterteilung muß nicht notwendigerweise an den Verzweigungsstellen erfolgen, wie dies in Fig. 1 dargestellt ist. Es ist vielmehr zweckmäßig, wenn die Unterteilung durch Gruppenseparatoren 2 so erfolgt, daß eine mit je einem Gruppenseparator 2 beendete Gruppe von Schaltstellen (Sensoren) 3 maximal 35 Schaltstellen 3 umfaßt, vorzugsweise maximal 15. Der Grund liegt darin, daß bei einem Defekt im Kabelstrang nicht mehr als 35 Schaltstellen ausfallen sollen, die dann durch Gruppenseparatoren 2 abgetrennt werden, wie unten noch ausgeführt wird. Es ist aber deshalb bevorzugt, die Anzahl der Schaltstellen 3 innerhalb einer Gruppe auf etwa 15, also etwa die Hälfte, zu begrenzen, weil ja auch ein Gruppenseparator 2 selbst vom Defekt betroffen sein könnte und dann zwei einander benachbarte Gruppen von Schaltstellen 3, d.h. die doppelte Anzahl einer Gruppe (falls die Gruppen eine gleichmäßige Anzahl von Schaltstellen 3 aufweisen, was aber, wie ersichtlich, nicht sein muß) ausfällt.

Die Schaltstellen 3 in Fig. 1 sind symbolisch durch einen Punkt am Sensorkabel 1 gekennzeichnet. Wie ersichtlich, sind mehrere Schaltstellen 3 je einem Gruppenseparator 2 zugeordnet und mit ihm zusammengeschaltet. Dabei können die Schaltstellen 3 des Kabels 1 in regelmäßigen oder unregelmäßigen Abständen am so gebildeten Sensorbus angebracht sein. Weiter ist es natürlich möglich, verschiedene Informationsquellen und/oder -Senken durch diese Schaltstellen miteinander zu verknüpfen.

Die Anordnung wird durch zwei, etwa an einander gegenüberliegenden Enden des Kabels 1 vorgesehene Kabelkopfrechner (oder -prozessoren) 18 und 18' angesteuert, die jeweils an einem Hauptsegmenteingang 17 bzw. 17' eines Gruppenseparatormoduls 2 angeschlossen sind, um so an den einzelnen Adressen von entlang des Kabels 1 vorgesehenen Sensoren deren ermittelten Daten abzufragen. Darüber hinaus sind vorteilhaft beide Kabelkopfrechner 18 und 18' sind durch eine Informatikleitung 36 miteinander verbunden, über die sie Statusinformationen betreffend die Anordnung austauschen können. Dies ist besonders dann vorteilhaft, wenn einer der Kabelkopfrechner 18 oder 18' einen Defekt feststellt (wie weiter unten im einzelnen dargelegt wird) und beispielsweise erst dann den zweiten Kabelkopfrechner 18' oder 18 in Betrieb setzt, so daß ab diesem Zeitpunkt die gesamte Kabelstrecke von zwei verschiedenen Seiten her, vorzugsweise von beiden Enden her, von beiden Kabelkopfrechnern abgefragt wird. Es versteht sich, daß die Erfindung jedoch nicht auf diese Betriebsart beschränkt ist. Es wäre ebenso möglich, beide Kabelkopfrechner 18 und 18' auch ohne Defekt in der Kabelstrecke gleichzeitig zu betreiben, wobei normalerweise die Anzahl der von einem der Kabelkopfrechner 18 bzw. 18' abfragbaren Schaltstellen 3 begrenzt ist, so daß die beiden Rechner 18, 18' einander nicht stören. Bei einem Defekt könnte dann der eine Rechner 18 die von ihm nicht mehr erreichbaren Adressen hinter der defekten Gruppe dem anderen Rechner 18' übergeben, damit sie von diesem abgefragt werden. Wenn beispielsweise das Hauptsegment 22a defekt wird, so könnten die daran angeschlossenen Stichsegmente vom Rechner 18' abgefragt werden. Dazu bedarf es nur einer entsprechend modifizierten Software.

Natürlich ist es auch möglich und in gewissen Anwendungsfällen vorzuziehen, die gesamte Anordnung nur durch einen Kabelkopfrechner anzusteuern, der abwechselnd, entweder an den einen oder den anderen Eingang 17 oder 17' der Anordnung gelegt wird. Dies kann beispielsweise durch einen softwaregesteuerten, hier nicht dargestellten Umschalter erfolgen. Bei derartigen Anordnungen entfällt natürlich die Informatikleitung 36, und ihre Funktion wird durch Software erfüllt, die intern im Kabelkopfrechner 18 bzw. 18' abläuft.

Die Gruppenseparatormodule 2 sind derart ausgelegt, daß sie Information in jede Richtung leiten können. Dadurch wird erreicht, daß jeder der beiden Kabelkopfrechner 18 und 18' alleine die gesamte Anordnung ansteuern kann.

Die Topologie des in Fig. 1 dargestellten Busses ist einerseits eine Ringstruktur, die zwischen den beiden Kabelkopfrechnern 18, 18', der verbindenden Informatikleitung 36 und den Hauptsegmenten 22a, 22b, 22c und 22d und den zwischengeschalteten Gruppenseparatormodulen 2 gebildet wird. Anderseits sind an diese Ringstruktur die Stichsegmente 21a, 21b, 21c, 21d, 21e und 21f samt ihren zugehörigen Abschlußelementen 19 angeschlossen. Daher sind alle Segmente, seien es nun Hauptsegmente 22a-22d oder Stichsegmente 21a-21f, des Sensorkabels (entsprechend dem Kabel 1) entweder durch ein Abschlußelement 19 oder durch einen Gruppenseparator 2 abgeschlossen.

Am Beispiel eines Gruppenseparatormoduls 2 ist in Fig. 1 gezeigt, wie die Versorgungsspannung des Systems durch eine externe Spannungsquelle 20 angeschlossen wird, wodurch die interne Spannungsversorgung des Systems regeneriert wird, und der Spannungsabfall, der durch die Last der abgeschlossenen Schaltstellen 3 und Gruppenseparatormodule 2 entsteht, kompensiert werden kann.

Die Adressierung der Struktur nach Fig. 1 erfolgt bevorzugt sequentiell, wobei vom ersten Kabelkopfrechner 18 zuerst das ihm am nächsten liegende Hauptsegment 22a durchadressiert wird. Anschließend werden durch ein in jedem Gruppenseparatormodul 2 vorhandener interner Umschalter alle Leitungen des Sensorkabels (vgl. Kabel 1) zuerst an das erste Stichsegment 21a gelegt, und dieses wird bis zu seinem Abschlußelement 19 adressiert, wobei die am Sensorkabel in Abständen vorhandenen Sensoren nach ihrem Sensorsignal (z.B. der Temperatur an der betreffenden Stelle) abgefragt werden.

In manchen Anwendungsfällen kann es vorteilhaft sein, statt aller Leitungen der Anordnung nur bestimmte Leiter durch die internen Umschalter der Gruppenseparatoren 2 anzuschalten. Dies hat eine Vereinfachung der Schalter zur Folge, bedingt jedoch, daß alle Segmente der nicht geschalteten Leiter permanent zusammenhängen, und kann daher zu höherem Stromverbrauch, zu einer größeren Ausfallrate (etwa bei Kurzschüssen) und zu einer höheren Empfindlichkeit gegenüber elektromagnetischen Störungen führen.

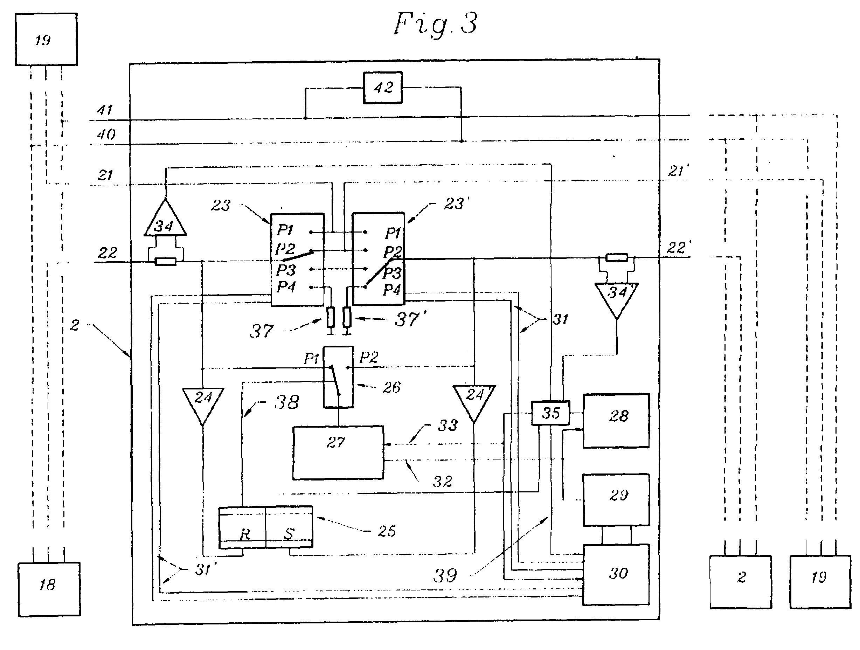

Das Abschlußelement 19 der jeweiligen Stichleitung, d.h. zunächst von 21a, erzeugt ein Abschlußsignal, das vom jeweiligen Kabelkopfrechner 18 (oder 18') empfangen wird, und dieser stellt daraufhin den jeweiligen internen Umschalter im Gruppenseparator 2 (siehe Fig. 3 ) in eine nächste Schaltstellung. In dieser Schaltstellung sind die Eingangsleitungen 17 des jeweiligen Gruppenseparatormoduls 2 mit dem nächsten Stichsegment 21b verbunden. Dieses wird dann wiederum durchadressiert, und das Adressieren seines Abschlußelements 19 bewirkt das Weiterschalten des internen Umschalters im Gruppenseparatormodul 2 so, daß das als nächstes das Stichsegment 21 c durchadressiert wird.

Nach Beendigung der Sensorabfrage dieses Stichsegmentes 21c wird der interne Umschalter im Gruppenseparatormodul 2 auf das nächste Hauptsegment 22b weitergeschaltet, wodurch alle diesem Hauptsegment 22b zugeordneten Schaltstellen 3 bis an den jeweils nächsten Gruppenseparatormodul 2' durchgestellt werden. Mit Hilfe der Umschalteinheit in diesem nächsten Gruppenseparatormodul 2' werden anschließend die Stichsegmente 21d und 21e durchadressiert.

Nach dem Durchadressieren der dem Hauptsegment 22b zugeordneten Stichsegmente 21d und 21e wird mit dem Weiterschalten des Schalterelements des Gruppenseparatormoduls das Hauptsegment 22c, und daran anschließend das Hauptsegment 22d adressiert.
Nach erfolgter Durchadressierung aller Hauptsegmente 22a-22d und ihrer zugehörigen Stichleitungen 21a-21f wird ein entsprechendes Signal über die Anschlußleitung 17 an den zweiten Kabelkopfrechner 18' abgegeben. Dieses Signal dient auch als Quittierung, daß die Adressierung der gesamten Struktur erfolgreich durchgeführt wurde.

Die Gruppenseparatormodule 2 sind vorteilhaft derart ausgelegt (siehe Fig. 3), daß sie von beiden Seiten adressiert werden können. Dies trifft natürlich auch für die zugehörigen Schaltstellen zu. Daher kann grundsätzlich jeder der beiden Kabelkopfrechner 18, 18' die gesamte Struktur jeweils von einer Seite her durchadressieren. Diese Möglichkeit wird ausgenutzt, um auftretende Fehler zu isolieren.

Tritt etwa im Kabelsegment 22b ein Fehler auf (zum Beispiel ein Leitungsunterbrechung, ein Kurzschluß od.dgl.), so kann die Schaltung so arbeiten, daß das Hauptsegment 22a und die Stichsegmente 21a, 21b, 21c vom ersten Kabelkopfrechner 18, und die Hauptsegmente 22d, 22c und die Stichsegmente 21d, 21e und 21f vom zweiten Kabelkopfrechner 18' adressiert werden.

Zu diesem Zweck ist in den Gruppenseparatormodulen 2 ein Schalter (der gegebenenfalls vom erwähnten Umschalter gebildet ist) vorgesehen, der das jeweils fehlerhafte Segment wegschaltet, und an seiner Stelle ein Abschlußelement 19 anschaltet. So führen einfache Fehler in der Ringstruktur maximal zum Ausfall eines einzigen Segmentes. Die Funktion zum Wegschalten eines Segments kann vom Kabelkopfrechner 18 bzw. 18' auch aktiviert werden, um eine ausgefallene Stichleitung (z.B. 21a, 21b oder 21c) vom System wegzuschalten. Dadurch kann erreicht werden, daß für alle Topologien beim Ausfall eines Segments die restlichen Segmente noch adressierbar bleiben.

Natürlich können die Gruppenseparatormodule 2 auch so ausgebildet werden, daß mehr als zwei Hauptsegmentanschlüsse vorgesehen sind. Dadurch können auch mehr als nur die Kabelkopfrechner 18 und 18' an die Struktur angeschlossen werden.

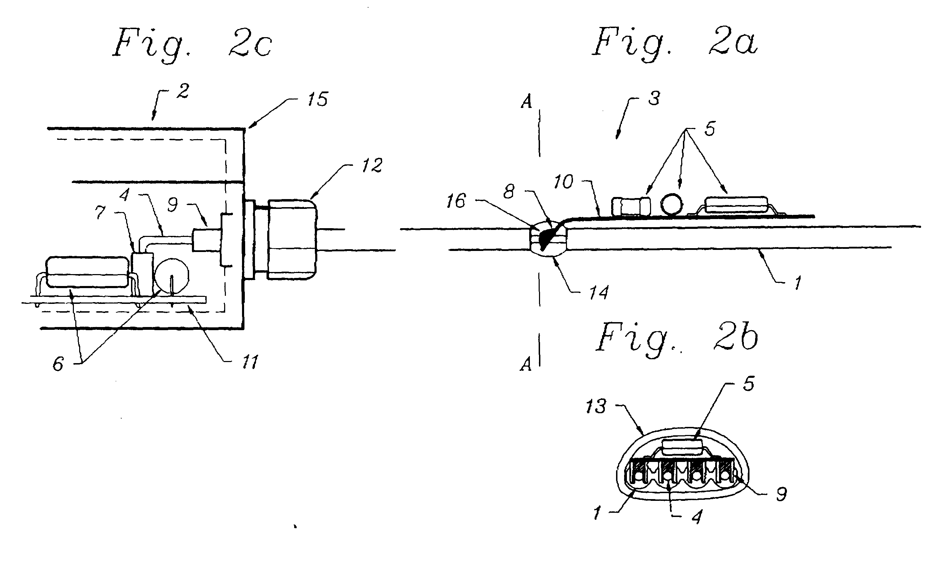

Die Fig. 2a bis 2c zeigen den mechanischen Aufbau eines erfindungsgemäßen Sensorkabels. Dabei wird eine bevorzugte Ausführungsform einer adressierbaren Schaltstelle 3 (Fig. 2a, 2b) und eines Gruppenseparatormoduls 2 (Fig. 2c) gezeigt. Das Sensorkabel 1 ist mittels Lötstellen 16, die die Leiter 4 des Sensorkabels 1 mit Kontaktzonen 8 eines Sensorprints (gedruckte Schaltung, Hybridschaltung oder IC) 10 mit elektronischen Bauteilen 5 (Adressen-Decoder, Schalter, Sensor) elektrisch verbunden und bildet mit dem vorzugsweise flexiblen Sensorprint 10 eine mechanische Einheit.

Im Zuge eines automatisierbaren Herstellungsprozesses wird eine isolierende Außenhülle 9 des Sensorkabels 1 im Bereiche der vorgesehenen Lötstellen entfernt, und nach dem Zusammenbau mit einer Vergußmasse 14 vergossen.

Die elektronischen Bauteile 5, die sich am Sensorprint 10 befinden, werden vorzugsweise in Form von SMD-Komponenten (Surface Mounted Devices) eingesetzt. Wenn das Sensorkabel 1 weitgehend miniaturisiert werden soll, können auch Komponenten in Chipform eingesetzt werden, wie oben bereits angedeutet wurde.

Der derart vormontierte Sensorprint wird in einem weiteren Arbeitsgang mit einem extrudierten Kabelmantel 13 umgeben, der das Kabel 1 vor äußeren Einflüssen schützt. Natürlich kann auch ein Kabelmantel 13 angebracht werden, der aus mehreren Schichten besteht. Davon kann beispielsweise eine Schicht als Feuchtigkeitsbarriere dienen, eine weitere Schicht als elektrische Schirmung, die extern induzierte elektromagnetische Störungen vom Kabel 1 fernhält, und eine dritte Schicht kann dem Kabel 1 seine mechanische Festigkeit und chemische Beständigkeit verleihen. Diese Schichten sind in der Fig. nicht eingezeichnet, um die Deutlichkeit der Darstellung nicht zu beeinträchtigen, sind aber dem Fachmanne an sich geläufig.

Da das Sensorkabel 1 im bevorzugten Beispiel der Fig. 2b durch eine Außenhülle 13 vollständig gekapselt ist, und der Sensorprint 10 zweckmäßig flexibel ist (da er zum Beispiel aus Kapton besteht), ist das resultierende Sensorkabel 1 mechanisch äußerst stabil, und kann relativ einfach automatisch hergestellt werden.

Fig. 2c zeigt einen Gruppenseparatormodul 2 gemäß der Erfindung. Dieser besteht vorzugsweise aus einem gekapselten Gehäuse 15 mit einer vorzugsweise dichten Durchführung 12 für das Sensorkabel 1, wobei dessen äußerer Kabelmantel 13 (Fig. 2b) dicht an das Gehäuse 15 angeschlossen ist, und nur die innere Isolierung 9 des Kabels 1 in das Gehäuse 15 gelangt. Die Leiter 4 (Fig. 2b) des Kabels 1 werden zweckmäßig mit einem Stecker 7 an eine gedruckte Schaltung (gedruckte Schaltung, Hybridschaltung oder IC) 11 des Gruppenseparators 2 angeschlossen. Denn die Anschlüsse des Sensorkabels 1 an die jeweiligen Gruppenseparatormodule 2 werden vorteilhaft in Form von Steckern 7 ausgeführt. Dadurch wird eine große Modularität und einfacher Ersatz von defekten Sensorkabelabschnitten erreicht. Die elektronischen Bauteile 6 des Gruppenseparatormoduls 2 können in herkömmlicher Technologie ausgeführt sein.

Das durchgehende Kabel zwischen den Gruppenseparatormodulen 2 bewirkt geringe Herstellkosten und automatisierte Fertigungsmöglichkeiten sowie mechanische Stabilität, und die Steckverbindungen 7 in den Gruppenseparatormodulen 2 ermöglichen die Anpassung der Topologie des Sensorbusses an das jeweilige Anwendungsproblem, wobei die Vor- und Nachteile der jeweiligen Ausbildung gemäß der Anzahl Schaltstellen 3 zwischen Gruppenseparatormodulen 2 gegeneinander abgewogen werden und an die Anwendung angepaßt werden können.

Fig. 3 zeigt die elektrischen Schaltkreise einer bevorzugten Ausführungsform des Gruppenseparatormoduls 2, an den zwei Stichleitungen 21 und 21' sowie zwei Hauptleitungen 22 und 22' angeschlossen sind. An die Hauptleitungen 22 und 22' sind entweder ein weiterer Gruppenseparatormodul 2 oder ein Kabelkopfrechner 18 angeschlossen. Die Stichleitungen 21 und 21' sind mit, in Fig. 3 lediglich durch eine Linie angedeuteten, Kabeln versehen, die durch ein adressierbares Abschlußelement 19 abgeschlossen sind. Natürlich weisen sowohl die Hauptleitungen 22 und 22' als auch die Stichleitungen 21 und 21' zwischen dem jeweiligen Anschluß des Gruppenseparatormoduls 2 und dem Abschlußelement 19 wie in Fig. 1 adressierbare, hier nicht eingezeichnete Schaltstellen 3 mit entsprechenden Sensoren auf.

Die Hauptleitungen 22 bzw. 22' werden über je einen Multiplex-Schalter 23 bzw. 23' entweder untereinander oder mit den Stichleitungen 21 bzw. 21' verbunden, oder sie werden durch Abschlußelemente 37 bzw. 37' abgeschlossen. Im Prinzip wäre es möglich, nur einen einzigen Schalter 23 oder 23' so auszubilden, daß er für beide angeschlossenen Hauptleitungen 22, und 22' als Multiplex-Schalter in der nachstehend beschriebenen Form bzw. mit der im folgenden erläuterten Funktion betrieben werden kann. Die Verwendung zweier, vorteilhaft an sich gleichartiger, Schalter 23 und 23' ist aber bevorzugt, doch wäre es beim Anschluß von mehr als zwei Leitungen 22, 22' auch möglich, jeder dieser Leitungen einen Multiplex-Schalter zuzuordnen.

Für ihre Funktion weisen die Multiplex-Schalter 23 bzw. 23' vier Stellungen auf, wovon eine Stellung P1 die Hauptleitung 22 bzw. 22' mit der Stichleitung 21 verbindet. Die Stellung P2 verbindet die Hauptleitungen 22 bzw. 22' mit der Stichleitung 21'. Wenn sich beide Multiplex-Schalter 23, 23' in der Stellung P3 befinden, werden beide Hauptleitungen 22 und 22' miteinander verbunden. Die Schalterstellung P4 dient dem Trennen der Verbindung der Hauptleitungen 22 und 22', wobei beide Leitungen an die Abschlußelemente 37 bzw. 37' gelegt werden. Die Schalterstellung P4 wird nach Anlegen der Versorgungsspannung selbsttätig eingenommen. Denn die Multiplex-Schalter 23, 23' im Beispiel der Fig. 3 sind vorteilhaft derart ausgelegt, daß sie sich nach Anlegen der Versorgungsspannung selbsttätig immer in die Stellung P4 stellen. Dadurch sind nach Anlegen der Versorgungsspannung alle Kabelsegmente 21, 21', 22 und 22' voneinander getrennt. Durch geeignete Ansteuerung der beiden Multiplex-Schalter 23, 23' kann daher erreicht werden, daß die Hauptleitungen von links (22') oder von rechts (22) angesteuert werden, und entweder mit einer der beiden Stichleitungen 21 bzw. 21' verbunden sind, oder vollkommen getrennt und abgeschlossen sind.

Die Ansteuerung der Multiplex-Schalter 23, 23' erfolgt über deren Adresseneingang durch Adressenleitungen 31 bzw. 31'. Natürlich können die Multiplex-Schalter 23, 23' derart ausgelegt werden, daß mehr als nur zwei Stichleitungen angeschlossen werden können. Dabei muß natürlich die Anzahl der Adressenleiter 31 bzw. 31' entsprechend erhöht werden. So können mit den zwei Adressenleitern 31, 31' dieses Beispiels zwei Stichleitungen angeschlossen werden. Wenn deren Anzahl auf drei erhöht wird, erhöht sich die Anzahl anschließbarer Stichleitungen auf sechs, bei vier Adressenleitern auf vierzehn usw.

Ein dritter Multiplex- bzw. Umschalter 26 mit zwei Stellungen P1, P2 legt fest, an welche der beiden Hauptleitungen 22 bzw. 22' ein Adressierdetektor 27 angeschlossen wird. In seiner Stellung P1 verbindet der Schalter 26 den Adressierdetektor 27 mit der linken Hauptleitung 22, in der Stellung P2 mit der rechten Hauptleitung 22'. Die Ansteuerung des Umschalters 26 geschieht durch Schwellwertschalter 24 und 24'. Diese sind so ausgelegt, daß jene Hauptleitung 22 bzw. 22', die als erste unter Spannung steht, einen Eingang eines Flip-Flops 25 ansteuert, der dieses in einen Zustand bringt, in dem sein Ausgang 38 den Umschalter 26 in die eine (P1) oder andere (P2) Stellung bringt. Dadurch wird der Adressierdetektor 27 mit jener Hauptleitung 22 oder 22' verbunden, die als erste unter Spannung steht.

Der Adressierdetektor 27 ist für den Empfang von Adressiersignalen ausgelegt, die von einem Kabelkopfrechner 18 (oder 18', siehe Fig. 1) empfangen werden. Diese Adressiersignale werden im Beispiel der Fig. 3 über die Anschlüsse der Hauptsegmente 22 bzw. 22' empfangen, und kommen von einem der beiden Kabelkopfrechner 18, 18' (siehe Fig. 1), die an die Anordnung gemäß Fig. 1 an ihrem linken bzw. rechten Ende angeschlossen sind. Im Beispiel der Fig. 3 ist der Kabelkopfrechner 18 am linken Anschluß angeschlossen.

Natürlich können neben den Leitern für die Adressiersignale auch alle anderen Leiter der Anordnung über entsprechende Schalteinrichtungen geschaltet werden. Dies ist aber in Fig. 3 aus Gründen der Deutlichkeit der Darstellung nicht eingezeichnet. Wenn weitere Kabeladern geschaltet werden sollen, so werden diese durch Schalter geführt, die analog zu den Multiplex-Schaltern 23 und 23' der Fig. 3 funktionieren, und die genau gleich angesteuert werden. Die Fig. 3 zeigt jedoch nur die Schalter für die Leiter für die Adressiersignale. Die Adressiersignale können über die Leitung im Beispiel der Fig. 3 durch eine beliebige Modulationsart übertragen werden. Da es sich bei den Multiplex-Schaltern 23, 23' und 26 der Fig. 3 um analoge Schalter handelt, kann auch die Modulationsart frei gewählt werden.

Die Adressensignale, die vom Kabelkopfrechner 18 bzw. 18' an den Adressierdetektor 27 gesendet werden, werden von diesem decodiert und über eine Leitung 32 an einen Zähler 28 geleitet. Dieser zählt die Adressiersignale und gibt nach einer vorbestimmten Anzahl von Signalen ein Rücksetzsignal an eine Logikschaltung 35, die über eine Leitung 33 den Adressierdetektor 27 deaktiviert, wenn die Eingangssignale der Logik 35 entsprechend gesetzt sind, so daß diese aktiviert ist. Daher ist, wenn die Logik 35 aktiviert ist, nach einer fest vorgegebenen Anzahl Adressiersignalen, die Leitung 33 aktiviert (ein Deaktivierungssignal steht an dieser Leitung), und der Adressierdetektor 27 ist deaktiviert.

Die Adressiersignale, die von einem der Kabelkopfrechner 18 bzw. 18' über eine der Leitungen 22 bzw. 22' und den Multiplex-Schalter 26 an den Adressierdetektor 27 geleitet werden, sind zweckmäßig auf mehr als nur eine Art moduliert. Verschiedene dieser Modulationstechniken sind dem Fachmann wohlbekannt. Im Beispiel der Fig. 3 wird das Adressiersignal entweder in Form von Impulsen von langer Dauer oder von kurzer Dauer ausgelegt. In der Impulslänge des Adressiersignals wird binäre Information codiert. Die Leitung 32 für die Adressiersignale wird dann einem Pulslängendiskriminator 29 zugeführt, der die Impulslänge des Adressiersignals mit einer festen Zeit vergleicht, und in ein Clock- und ein Datensignal umsetzt, das an ein Schieberegister 30 ausgegeben wird. Eine Ausgangsleitung 39 des Schieberegisters 30 wird der Logikschaltung 35 zugeleitet. Diese Leitung 39 wird vom Kabelkopfrechner 18 über den Adressierdetektor 27, und den Pulslängendiskriminator 29 unter ein Deaktivierungssignal gesetzt, und bewirkt, daß der Adressierdetektor 27 des Gruppenseparatormoduls 2 deaktiviert wird.

Die Information, in welche Schalterstellung die beiden Multiplex-Schalter 23 und 23' gebracht werden sollen, stammt aus diesem Schieberegister 30. Die Ausgangssignale des Schieberegisters 30 werden über die Leitungen 31, 31' an die Multiplex-Schalter 23 und 23' geleitet. Dabei wird die in das Schieberegister 30 durch den Pulslängendiskriminator 29 getaktete Information an die Ausgangsleitungen gelegt, wenn der Zähler 28 die fest vorgegebene Anzahl Adressiersignale gezählt hat. Dadurch wird erzielt, daß nach Erreichen der fest vorgegebenen Anzahl von Adressiersignalen (entsprechend der Anzahl von Schaltstellen 3 eines Segmentes in Fig. 1) der Adressierdetektor 27 deaktiviert wird, und gleichzeitig die Multiplex-Schalter 23 und 23' in die gewählte, d.h. die als nächstes vorgesehene Stellung gebracht werden.

Die Abschlußelemente 37 bzw. 37' eines Gruppenseparatormoduls 2 oder eines Abschlußelementes 19 bewirken im Beispiel der Fig. 3, daß ein Strom einer gewissen Stromstärke über den jeweiligen Hauptleiter 22 bzw. den Stichleiter 21 fließt. Darüber hinaus wird ein zusätzlicher Strom aus dem Leiter gezogen, wenn der Adressierdetektor 27 eines Abschlußelementes 19 oder eines Gruppenseparatormoduls 2 anspricht. Dieser Strom wird in Detektorschaltungen 34 und 34' gemessen und in ein Signal umgesetzt, das an die Logikeinheit 35 geleitet wird. Weiter wird der Logik auch das Signal der Ausgangsleitung 38 zugeführt, mit dem entschieden werden kann, an welchem Anschluß einer Hauptleitung 22 der Kabelkopfrechner 18 angeschlossen ist. Dadurch kann unter den beiden Detektorschaltungen 34 und 34' jene ausgewählt werden, die nicht am Kabelkopfrechner 18 hängt. Wenn nun diese Detektorschaltung 34 bzw. 34' mißt, daß ein Abschlußelement 19 adressiert wird, wird die Deaktivierung des Adressierdetektors 27 aufgehoben, wenn die Logik 35 nicht über eine Leitung 39 permanent deaktiviert wurde.
Dadurch wird erreicht, daß nach Adressieren einer Stichleitung 21 und Erreichen von deren Abschlußelement 19 das nächste Adressiersignal wieder im Adressendetektor 27 detektiert wird, der anschließend durch Umschalten der Multiplex-Schalter 23 und 23' ein anderen Segment der Anordnung ansteuern kann. Eine weitere Möglichkeit besteht darin, an die Abschlußelemente, die ja einen eventuellen Überstrom ableiten, einen Detektor für diesen Überstrom anzuschließen. Schließlich ist es auch denkbar, mehrere solcher verschiedenartig aufgebauter bzw. arbeitender Defektsensoren zu verwenden.

Mit solchen Defektsensoren, die hier am Beispiel der Detektorschaltungen 34 und 34' gezeigt sind, läßt sich auch erfindungsgemäß ein Verfahren (und eine entsprechende Vorrichtung) verwirklichen, das (bzw. die) nicht unbedingt auf die Gruppenseparatoren angewiesen ist, obwohl diese auch in diesem Zusammenhang besonders vorteilhaft sind. Dieses Verfahren besteht darin, daß die Funktion der Kabelstrecke überwacht wird (was zweckmäßig mit Hilfe mindestens eines der oben erläuterten Defektsensoren geschieht), und daß bei Feststellung eines Defektes ein Alarmsignal ausgelöst wird. Dieses Alarmsignal kann dann gegebenenfalls über eine entsprechende Alarmeinrichtung (visuell und/ oder akustisch) einer Bedienungsperson mitgeteilt werden, die die entsprechende Abschaltung entweder der gesamten Anlage, vorzugsweise aber nur eines Segmentes, vornimmt. Auch hier können also die Gruppenseparatoren 2 für die manuelle Abschaltung nützlich sein. Dies zeigt, daß dem Patentanspruch 2 - auch ohne einen Gruppenseparator - gesonderte erfinderische Bedeutung zukommt.

Wenn alle an den Gruppenseparatormodul 2 angeschlossenen Stichsegmente 21 adressiert wurden, legt der Kabelkopfrechner 18 an die Ausgangsleitung 39 des Schieberegisters 30 ein Deaktivierungssignal und deaktiviert derart permanent den Adressendetektor 27 des Gruppenseparatormoduls 2. Im Normalfall werden dabei die Multiplex-Schalter 23 bzw. 23' auf die nächste Hauptleitung 22 geschaltet, wodurch das nächste Hauptsegment angesteuert wird. Beim nächsten Rücksetzen der gesamten Anordnung wird die Logik 35 und das Schieberegister 30 zurückgesetzt, und dadurch kann der gesamte Zyklus wieder beginnen.

Der Ablauf zum Durchadressieren des Gruppenseparatormoduls 2 der Anordnung ist der folgende:

Nach Anlegen der Versorgungsspannung werden alle Bauelemente des Gruppenseparatormoduls 2 in eine definierte Ausgangsposition zurückgesetzt. Diese Ausgangsposition ist die Schalterstellung P4 für die beiden Multiplex-Schalter 23 und 23', und eine dieser Schalterstellung entsprechende Stellung des Schieberegisters 30. Dadurch wird gewährleistet, daß alle Hauptsegmente 22 und Stichsegmente 21 voneinander und vom Kabelkopfrechner 18 bzw. 18' getrennt sind, und nur das erste, unmittelbar am Kabelkopfrechner 18 bzw. 18' angeschlossene Segment über 22 bzw. 22' angeschlossen ist.

Die Stellung des Schalters 26 für das Abschlußelement 19 ist nach Anlegen der Versorgungsspannung nicht definiert. Diese wird jedoch durch Anlegen einer Spannung an den Leiter 22 oder 22' gesteuert, und zwar in jene Stellung gebracht, dessen Leiter als erster unter Spannung gesetzt wird. Dies geschieht, wie beschrieben, durch die Elemente 24, 24' und 25. Dadurch wird der Gruppenseparatormodul 2 in eine Konfiguration gebracht, in der jener Kabelkopfrechner 18 oder 18' mit dem Abschlußelement 19 verbunden ist, der als erster den Leiter 22 unter Spannung gesetzt hat. Dies bedeutet, daß dem Schalter 26 die Funktion eines Richtungsschalters für die Abfragerichtung vom einen oder anderen Kabelkopfrechner 18 oder 18' her zukommt.

Dieser Kabelkopfrechner 18 oder 18' sendet anschließend eine feste Anzahl modulierter Adressenimpulse an den Gruppenseparatormodul 2, die vom kombinierten Abschluß- und Decodierelement 27 empfangen werden. Diese modulierten Adressiersignale enthalten die Information, in welche Schalterstellung die Multiplex-Schalter 23 und 23' gebracht werden sollen. Nach Empfang des letzten Adressiersignals wird durch die Leitung 33 die Schalterstellung an die Leiter 31 und 31' ausgegeben, und das Abschlußelement 27 wird deaktiviert. Danach ist das Bussystem mit dem jeweils gewählten Segment verbunden. Bei diesem kann es sich nun um ein Hauptsegment 22 oder um ein Stichsegment 21 handeln, wobei das Hauptsegment 22 zu einem weiteren Gruppenseparatormodul 2 führt und daher an 22 oder 22' angeschlossen ist bzw. das jeweilige Stichsegment 21 bzw. 21' zum zugehörigen Abschlußelement 19 führt.

Wenn es sich bei dem jeweils neu adressierten Kabelsegment um ein Stichsegment 21 bzw. 21' handelt, wird die Ausgangsleitung 39 des Schieberegisters nicht mit einem Deaktivierungssignal besetzt, und daher wird die Logik 35 zum Erzeugen des Deaktivierungssignals über die Leitung 33 aktiv belassen.

Nach dem Durchadressieren aller Stichsegmente 21 bzw. 21' wird das nächste Hauptsegment 22 bzw. 22' angeschaltet, analog zu dem, was oben an Hand der Fig. 1 erläutert wurde. Dabei wird gleichzeitig die Logik 35 über die Leitung 39 deaktiviert, und am Aktivieren des Adressierdetektors 27 gehindert. Durch das Verbinden der Segmentleiter 22 und 22' wird der jeweils neu angeschaltete Leiter unter Spannung gesetzt, und die Multiplex-Schalter 23 und 23' fallen in ihre Ausgangsstellung P4. Daher sind alle angeschlossenen Segmente (Haupt- oder Stichsegmente) durch die Abschlußelemente 37 und 37' abgeschlossen.

Der Kabelkopfrechner 18 adressiert anschließend das Haupt- oder Stichsegment 22 bzw 21 durch, wobei alle angeschlossenen Schaltstellen 3 (vgl. Fig. 1) der Reihe nach nach ihren Sensorsignalen abgefragt werden. Natürlich können auch selektiv nur die jeweils gewünschten Schaltstellen 3 adressiert werden. Nach Adressieren der letzten Schaltstelle 3 wird das Abschlußelement 19 des Segments 21 oder 22 adressiert. Bei diesem handelt es sich um ein Abschlußelement 19, wenn das Segment ein Stichsegment 21 ist, oder um einen Adressierdetektor 27 im Falle der Hauptleitung 22. Der Kabelkopfrechner 18 empfängt dasjenige Stromsignal, das vom Abschlußelement 19 oder vom Adressierdetektor 27 ausgesendet wird, und interpretiert dieses als Quittierung, daß ein Segment der Anordnung bis zu seinem Ende durchadressiert wurde. Darüber hinaus wird dieses Stromsignal auch durch die Detektorschaltungen 34 bzw. 34' aller Gruppenseparatormodul 2 erkannt, und die Logikschaltung 35 jenes Gruppenseparatormoduls 2, dessen Eingangsleitung 39 nicht mit einem Deaktivierungssignal besetzt ist, wird wieder aktiviert, und kann beim nächsten Adressieren die Multiplex-Schalter 23 und 23' auf ein nächstes Segment legen.

Es sei erwähnt, daß die Detektorschaltungen 34 bzw. 34' gegebenenfalls als Defektsensoren dienen können, die bei Unterbrechung eines Segmentes oder bei Kurzschluß dies feststellen. Es kann dann gegebenenfalls ein entsprechendes Signal an den Kabelkopfrechner 18 bzw. 18' ergehen, oder die Detektorschaltungen 34 bzw. 34' sind, z.B. über die Logik 35, zur Absperrung des fehlerhaften Segmentes mit den Schaltern 23, 23' verbunden. Es wird aber vorteilhaft sein, wenn dann die Detektorschaltungen 34 bzw. 34' auch eine Information an den Kabelkopfrechner 18 geben. Da es sich hier um ein Bussystem handelt, bereitet dies über die sowieso vorgesehene und aus Fig. 1 ersichtliche Busverbindung keine Probleme. In jedem Falle bedeutet dies aber, daß entsprechende Software (Programmspeicher) vorgesehen ist, die auf Grund der Feststellung eines Defektes die oben beschriebene Umschaltung bewirkt.

Wenn der Kabelkopfrechner 18 bzw. 18' die Versorgungsspannung zurücksetzt und anschließend wieder anlegt, wird mit dem Zyklus von vorne begonnen. Das Rücksetzen des gesamten Zyklus kann natürlich auch durch ein besonderes Rücksetzsignal eingeleitet werden, das über einen Leiter übermittelt wird. Wenn der Kabelkopfrechner 18 bzw. 18' an einem der Segmente 21 oder 22 einen Defekt feststellt, wird dessen (Anfangs-) Adresse in einem Speicher des Kabelkopfrechners 18 bzw. 18' festgehalten und dieses beim nächsten Mal nicht mehr adressiert. Der entsprechende Multiplex-Schalter 23 oder 23', an den ein solches Segment angeschlossen ist, wird auf P4 geschaltet. Die Feststellung eines Defektes durch den Kabelkopfrechner 18 bzw. 18' kann auf verschiedene Weise erfolgen. Eine der Möglichkeiten wird bereits in den oben genannten U.S. Patenten beschrieben und besteht im wesentlichen in einem Vergleich der Nutzspannung (oder Nutzstrom) mit einem Bezugswert, so daß ein Spannungsabfall, z.B. auf Grund eines Kurzschlusses, sofort erkannt werden kann. Eine andere Möglichkeit besteht darin, daß durch einen Defekt in den meisten Fällen der Adressendecoder 17 der betreffenden Schaltstelle nicht mehr ansprechbar ist, so daß daraus die fehlerhafte Adresse ableitbar ist. Auch können auf andere Weise Strom- oder Spannungssensoren im Kabelkopfrechner die Unterbrechung einer Leitung bzw. eines Segmentes feststellen. In jedem Falle bedeutet dies aber, daß der jeweilige Kabelkopfrechner 18 bzw. 18' zweckmäßig mit einer Defektsensoreinheit ausgestattet ist, die gegebenenfalls von der Adressierstufe des Kabelkopfrechners selbst gebildet ist. Eine Alternative wäre noch, daß die Defektsensoreinheit unabhängig vom Kabelkopfrechner 18 angeordnet ist und diesen über ein entsprechendes Defektsignal lediglich informiert: In Fig. 3 sind zwei Versorgungsleitungen 40, 41 vorgesehen, die die einzelnen Komponenten der dargestellten Schaltung mit Strom versorgen und daher mit dem Sensorkabel 1 mitlaufen (eine der Leitungen 4 in Fig. 2b). Zwischen beiden Leitungen 40, 41 ist ein weiterer Defektsensor 42 eingezeichnet, der einen Kurzschluß und/oder eine Überspannung festzustellen vermag. Die Art seines Aufbaues kann herkömmlich sein (z.B. wie bei Überstrom-Schutzschaltern) und braucht daher nicht im einzelnen beschrieben zu werden.

Wenn sich zwei Kabelkopfrechner 18, 18' an der Anordnung befinden, wie dies in Fig. 1 dargestellt ist, können sich diese dann über die Informatikleitung 36 (Fig. 1) verständigen, so daß jeder der beiden Kabelkopfrechner 18, 18' nur den von ihm erreichbaren Teil der Anordnung adressiert und nur das Segment mit dem Defekt ausfällt.

Es versteht sich, daß das gruppenweise Absperren von Segmenten auch absichtlich, d.h. ohne einen Defekt, z.B. durch einen entsprechenden manuell betätigbaren Schalter am Kabelkopfrechner 18 oder 18', herbeigeführt werden kann, etwa wenn ein Abschnitt einer Tunnelstrecke wegen Reparaturarbeiten von der Überwachung durch die erfindungsgemäße Einrichtung ausgenommen werden soll.

## Patentansprüche

1. Meßanordnung mit mindestens zwei gesondert anwählbaren Meßeinheiten (3) entlang mindestens einer Kabelstrecke (21, 22), welche Meßeinheiten (3) über mindestens eine an der Kabelstrecke (21, 22) angebrachte Abfragestation (18, 18') abfragbar sind, **dadurch gekennzeichnet**, daß mindestens zwei Meßeinheiten eine Gruppe bilden und jeweils am Ende einer von einer weiteren Gruppe (21, 22b) gefolgten Gruppe (22a) von Meßeinheiten (3) ein mit wenigstens einem Schalter (23, 23') versehener Gruppenseparatormodul (2, 2') vorgesehen ist, durch Welchen die Gruppe (22a) von der mindestens einen weiteren Gruppe (21, 22b) separierbar bzw. abschaltbar ist.

2. Meßanordnung nach Anspruch 1, dadurch gekennzeichnet, daß der wenigstens eine Schalter (23, 23') von wenigstens einem Defektsensor (34, 34', 42) steuerbar ist, und daß vorzugsweise der Defektsensor (34, 34', 42) mit der Abfragestation (18, 18') verbunden ist.

3. Meßanordnung nach Anspruch 1 oder 2, dadurch gekennzeichnet, daß mindestens eine Gruppe von Meßstationen durch ein Abschlußelement abgeschlossen ist.

4. Meßanordnung nach einem der vorhergehenden Ansprüche, dadurch gekennzeichnet, daß die Kabelstrecke von wenigstens zwei Seiten her ansteuerbar ist, und daß die Kabelstrecke hierzu jeweils einen ansteuerbar ausgebildeten Eingang aufweist und/oder
daß mindestens zwei Abfragestationen (18, 18') entlang der Kabelstrecke (21, 22), vorzugsweise jeweils im Bereiche der Enden der Kabelstrecke (21, 22), vorgesehen sind, und daß für den Fall eines Defektes an einem Teil der Kabelstrecke (21, 22) die von der einen Abfragestation nicht erreichbaren Adressen hinter dem Defekt von der jeweils anderen Abfragestation abfragbar sind.

5. Meßanordnung nach Anspruch 4, dadurch gekennzeichnet, daß mindestens zwei Abfragestationen (18, 18') zur gegenseitigen Information über den Status an ihrem Teil der Kabelstrecke (21, 22) über eine Informatikleitung (36) miteinander verbunden sind und/oder
ein Kabelkopfrechner vorgesehen ist, der über einen Umschalter abwechselnd an den einen oder anderen Eingang (17 bzw. 17') der Anordnung der Kabelstracke legbar ist.

6. Meßanordnung nach Anspruch 4 oder 5, dadurch gekennzeichnet, daß der Gruppenseparatormodul (2, 2') einen Richtungsschalter (26) zwischen mindestens zwei Abfrageleitungen zur Bestimmung der Abfragerichtung von einer der mindestens zwei Abfragestationen (18, 18') aufweist.

7. Meßanordnung nach einem der vorhergehenden Ansprüche, dadurch gekennzeichnet, daß mindestens zwei Schalter (23, 23') in einem Gruppenseparatormodul (2, 2') vorgesehen sind, wovon der eine Schalter (23 oder 23') einer an den Gruppenseparatormodul (2, 2') Leitung (22 oder 22'), der andere einer jeweils anderen Leitung (22' oder 22) zugeordnet ist.

8. Meßanordnung nach einem der vorhergehenden Ansprüche, dadurch gekennzeichnet, daß mindestens am Ende einer, von keiner anderen Gruppe gefolgten Gruppe (21) ein Abschlußelement (19) vorgesehen ist, durch welches die Beendigung der vollständigen Abfrage der betreffenden Gruppe (21) an die Abfragestation (18, 18') rückmeldbar ist.

9. Meßanordnung nach einem der vorhergehenden Ansprüche, dadurch gekennzeichnet, daß eine mit einem Gruppenseparator (2) beendete Gruppe von Schaltstellen (3) maximal 35 Schaltstellen (3) umfaßt, vorzugsweise maximal 15.

10. Meßverfahren, insbesondere mit einer Anordnung nach einem der vorhergehenden Ansprüche, dadurch gekennzeichnet, daß die Funktion der Kabelstrecke (21, 22) gruppenweise überwacht wird, und daß bei Feststellung eines Defektes ein Alarmsignal ausgelöst wird.
